# EUROPÄISCHE PATENTSCHRIFT

(11) **EP 0 806 323 B1**
(45) Veröffentlichungstag und Bekanntmachung des Hinweises auf die Patenterteilung: **24.02.1999**
(21) Anmeldenummer: 97107342.4
(22) Anmeldetag: 03.05.1997
(51) Int. Cl.: B60R 21/00

(54) **Verfahren zur Überprüfung der Funktionsfähigkeit eines Ausgangsschaltkreises einer Auslöseschaltung eines Sicherheitssystems**
Method of testing the functioning of an output stage of a triggering circuit of a safety device
Procédé pour tester la fonction du stage de sortie d'un circuit de déclenchement d'un appareil de sécurité

(30) Priorität: 11.05.1996 DE 19619118
(43) Veröffentlichungstag der Anmeldung: 12.11.1997
(73) Patentinhaber: TEMIC TELEFUNKEN microelectronic GmbH, 74072 Heilbronn (DE)
(72) Erfinder: Fendt, Günter, 86529 Schrobenhausen (DE); Pollmann, Jörg, 74193 Stetten a.H. (DE)
(74) Vertreter: Maute, Hans-Jürgen, Dipl.-Ing.

(56) Entgegenhaltungen:
- EP-A- 0 590 180
- DE-A- 3 920 713
- DE-A- 3 922 506
- US-A- 5 134 306
- US-A- 5 176 214
- US-A- 5 389 822

## Beschreibung

Die Erfindung betrifft ein verfahren zum Überprüfen der Funktionsfähigkeit eines Ausgangsschaltkreises einer Auslöseschaltung eines Sicherheitssystems nach dem Oberbegriff des Patentanspruchs 1.

Ein derartiges verfahren ist der DE 39 22 506 zu entnehmen. Es liegt die Erkenntnis zugrunde, daß: 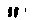 ...beim Ein- und Ausschalten des Auslösesensors die zugehörige versorgungsspannung den gesamten Spannungsbereich durchläuft. Hierdurch können Zustände auftreten, in denen z.B. integrierte Schaltkreise des Auslösesensors keine definierte Funktion aufweisen, so daß es zu einer Fehlauslösung kommen kann." (Sp. 1, Z. 32 bis 37) Nach dem Einschalten des Sicherheitssystems wird deshalb zunächst eine Sperrschaltung zum verriegeln der Zündendstufe aktiviert und 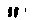 ...die Zündendstufe solange verregelt, bis die versorgungsspannung eine die Funktionsfähigkeit der gesamten Schaltungsanordnung sicherstellende Schwelle überschritten hat."

(Sp. 2, Z. 47 bis 50) Der DE 39 22 506 kann darüber hinaus eine 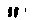 ...Prüfung auf den korrekten Zustand der beteiligten Systemkomponenten..." entnommen werden, die 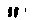 ...während der Verriegelungs-Freigabezeit ... erfolgt." (Sp. 5, Z.19 bis 23). Wie aus der Beschreibung hervorgeht, wird diese überprüfung durchgeführt, 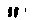 ...wenn der Sperranschluß einen Zustand annimmt, der zur Aufhebung der verriegelung der Zündstufe führt." ( Sp. 3, Z. 37 - 46). Der Auslösekondensator wird bei verriegelter Zündendstufe auf seine Sollspannung aufgeladen und nachfolgend bei noch verriegelter Zündendstufe die Systemkomponenten überprüft.

Bei Sicherheitssystemen, insbesondere bei Sicherheitssystemen in Kraftfahrzeugen, die personenschützende Mittel, wie Airbags, Gurtstraffer und dergleichen umfassen, ist eine sehr hohe Systemzuverlässigkeit erforderlich.

Insbesondere bei sicherheitskritischen Moduleinheiten wird verlangt, daß diese stets funktionsbereit sind und daß, falls doch ein Fehler auftritt, dieser sofort angezeigt wird, damit sich der Benutzer eines Fahrzeugs, der auf die Funktionsfähigkeit des Sicherheitssystems vertraut, sich nicht in einer Scheinsicherheit wiegt, sondern umgehend für eine Überprüfung und Instandsetzung des Sicherheitssystems sorgen kann.

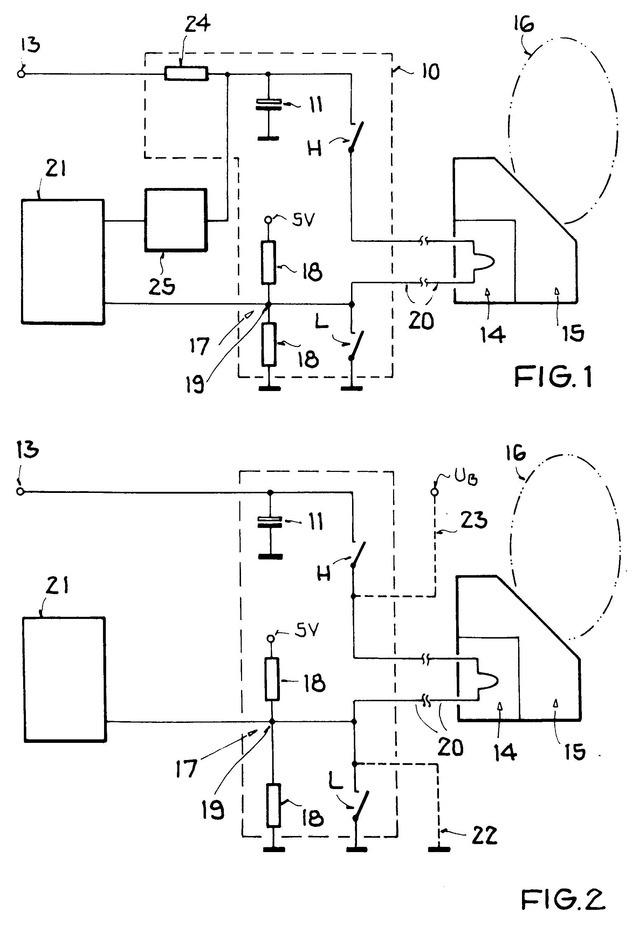

Bei Airbag-/oder Gurtstraffersystemen werden daher elektrische und/oder elektronische Komponenten des Systems während einer von der Systemelektronik durchgeführten Eigendiagnose auf ihre Funktionsfähigkeit hin überprüft. Bei einem herkömmlichen Airbagsystem weist - wie Figur 1 zeigt - ein als Endstufe dienender Ausgangsschaltkreis 10 einen Zünd- oder Auslösekondensator 11 auf, der mit seinem einen Anschluß an einen Versorgungsspannungseingang 13 und mit seinem anderen Anschluß an Masse angeschlossen ist. Der mit dem Versorgungsspannungseingang 13 verbundene Anschluß des Auslösekondensators 11 ist über einen ersten Schalter H, eine Auslöseeinrichtung, zum Beispiel eine Zündpille, und einen zweiten Schalter L mit Masse verbunden, so daß, wenn der erste und der zweite Schalter H bzw. L geschlossen werden, ein Auslösestrom durch die Auslöseeinrichtung 14 fließt. Die Auslöseeinrichtung 14 setzt daraufhin eine Betätigungseinrichtung 15, zum Beispiel einen Gasgenerator, in Gang, die im Falle eines Airbagsystems einen Airbag 16 aufbläst.

Für die Eigendiagnose ist im Ausgangsschaltkreis 10 ein Spannungsteiler 17 vorgesehen, dessen Widerstände 18 in Reihe zwischen einer vorgegebenen Spannung von beispielsweise 5 V und Masse liegen. Ein Mittelabgriff 19 des Spannungsteilers 17 ist einerseits mit einer zwischen den Schaltern H und L liegenden, zur Auslöseeinrichtung 14 führenden Leitung 20 und andererseits mit einem Eingang einer Prüf- u. Auswerteschaltung 21 verbunden. Die Prüf- u. Auswerteschaltung 21 ist dabei Bestandteil einer Auslöseschaltung oder Auslöseelektronik und kann beispielsweise in einem Mikroprozessor integriert sein.

Die Widerstände 18 des Spannungsteilers 17 sind so ausgelegt, daß eine Spannung Uz am Mittelabgriff 19 einen definierten Wert, z. B. 2 V, besitzt, solange die Leitung 20 auf einem schwebenden Potential liegt. Da die Leitung 20 normalerweise durch die Schalter H, L sowohl vom Auslösekondensator 11 als auch von Masse getrennt ist, liegt die Leitung 20 und die Auslöseeinrichtung 14 auf dem durch die Spannung Uz am Mittelabgriff 19 des Spannungsteilers 17 vorgegebenen Potential.

Solange die Spannung Uz am Mittelabgriff 19 des Spannungsteilers 17 gleich dem vorgegebenen Wert, also beispielsweise gleich 2 V ist, gilt die beispielsweise in einem Kabelbaum angeordnete Leitung 20 als fehlerfrei. Es liegt also weder eine fehlerhafte Verbindung der Leitung 20 mit Masse (Masseschluß) noch eine fehlerhafte Verbindung der Leitung 20 mit einer die Batteriespannung führenden Leitung (Anliegeschluß gegen U_{B})vor.

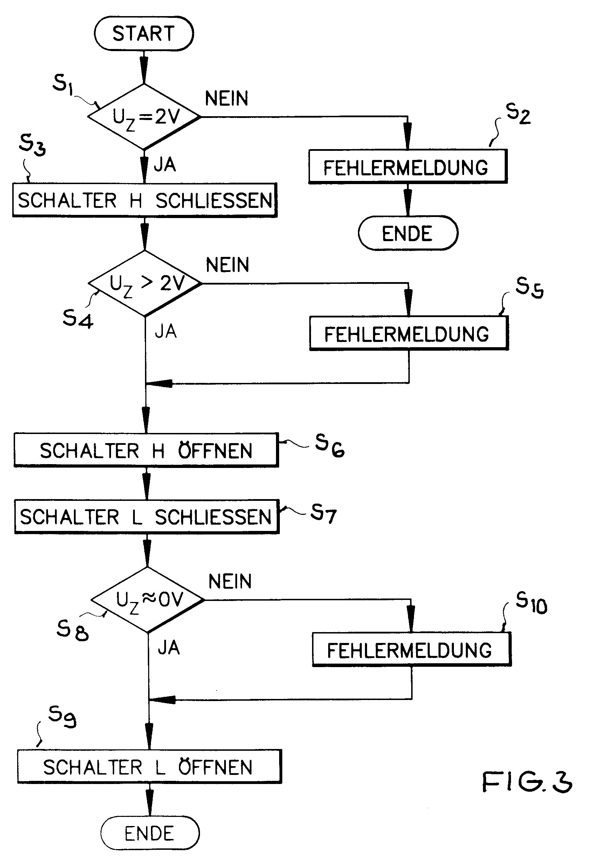

Um in herkömmlicher Weise die beiden Schalter H und L auf ihre Funktionsfähigkeit hin zu überprüfen, wird - wie Figur 3 zeigt - nach dem Starten der Prüfroutine zunächst im Schritt S1 festgestellt, ob die Spannung Uz am Mittelabgriff 19 des Spannungsteilers 17 gleich dem vorgegebenen Wert, also gleich 2 V ist. Ist die Spannung Uz größer oder kleiner als der vorgegebene Wert 2 V, so liegt ein Anliegeschluß gegen die Batteriespannung U_{B} bzw. gegen Masse vor und im Schritt S2 wird eine entsprechende Fehlermeldung erzeugt. Die Prüfroutine wird daraufhin abgebrochen.

Wird im Schritt S1 festgestellt, daß die Spannung Uz gleich dem vorgegebenen Wert ist, daß also die Leitung 20 als fehlerfrei bewertet wird, so wird im Schritt S3 der erste Schalter H geschlossen. Im Schritt S4 wird überprüft, ob die Spannung Uz größer als der vorgegebene Wert 2 V ist. Ist die Spannung Uz nicht angestiegen, so hat der Schalter H nicht einwandfrei geschlossen und im Schritt S5 wird eine entsprechende Fehlermeldung erzeugt. Wurde im Schritt S4 ein Anstieg der Spannung Uz und damit die einwandfreie Funktion des ersten Schalters H festgestellt, so wird im folgenden Schritt S6 der erste Schalter H wieder geöffnet. Dies erfolgt auch falls trotz einer Fehlermeldung in Schritt S5 die Prüfung des zweiten Schalters durchgeführt werden soll.

Nach dem Öffnen des ersten Schalters H in Schritt S6 wird im Schritt S7 der zweite Schalter L geschlossen und im Schritt S8 wird geprüft, ob die Spannung Uz kleiner als der vorgegebene Wert 2 V ist. Trifft dies zu, so hat der zweite Schalter L fehlerfrei geschlossen. Somit kann nach dem Öffnen des Schalters L in Schritt S9 die Prüfroutine beendet werden. Wird bei der Überprüfung der Spannung Uz bei geschlossenem zweiten Schalter L festgestellt, daß die Spannung nicht nahezu dem Massepotential entspricht, so wird im Schritt S10 eine Fehlermeldung erzeugt, die anzeigt, daß der zweite Schalter L nicht einwandfrei schließt.

Dieses herkömmliche Prüfverfahren arbeitet zwar relativ sicher, es birgt jedoch eine, wenn auch geringe Gefahr, daß es beim Testen der Schalter H, L zu einer Fehlauslösung der Auslöseeinrichtung 14 kommen kann. Trifft beispielsweise nach dem Überprüfen der Leitung 20 im Schritt S1 ein sporadischer Masseschluß auf, wie in Figur 2 durch eine gestrichelt dargestellte Leitung 22 angedeutet ist, so fließt beim Schließen des ersten Schalters H ein Auslösestrom obwohl der zweite Schalter L geöffnet ist. Umgekehrt kann bei einem sporadisch auftretenden Anliegeschluß gegen die Batteriespannung U_{B}, der durch eine gestrichelt dargestellte Leitung 23 angedeutet ist, beim Schließen des zweiten Schalters L ein Auslösestrom durch die Auslöseeinrichtung 14 trotz geöffneten ersten Schalters H fließen. In beiden Fällen kommt es zu einer unerwünschten Auslösung des Airbags oder einer anderen personenschützenden Einrichtung.

Davon ausgehend liegt der Erfindung die Aufgabe zugrunde, ein weiteres Verfahren zum Überprüfen der Funktionsfähigkeit eines Ausgangsschaltkreises einer Auslöseschaltung eines Sicherheitssystems bereitzustellen, bei dem insbesondere die Gefahr von Fehlauslösungen weiter verringert bzw. ausgeschlossen ist.

Diese Aufgabe wird durch das Verfahren nach Anspruch 1 gelöst.

Erfindungsgemäß wird also die Überprüfung der Schalter im Ausgangsschaltkreis nicht zu einem beliebigen Zeitpunkt nach dem Einschalten des Sicherheitssystems sondern sofort nach dem Einschalten vorgenommen, bevor der Zünd- oder Auslösekondensator aufgeladen ist. Zur Überprüfung der Schalter, die die Auslöseeinrichtung auf einem schwebenden Potential halten, werden diese also geschlossen, solange die Spannung am Auslösekondensator noch so klein ist, daß der dadurch bewirkte Strom durch die Auslöseeinrichtung nicht ausreicht, um diese auszulösen. Hierbei wird insbesondere eine Fehlauslösung infolge eines sporadisch auftretenden oder ständig vorliegenden, den zwischen der Auslöseeinrichtung und Masse liegenden Schalter kurzschließenden Masseschlusses sicher verhindert.

Ein weiterer Vorteil des erfindungsgemäßen Verfahrens besteht darin, daß auch Ausgangsschaltkreise, die nur einen Schalter aufweisen, ohne die Gefahr einer Fehlauslösung auf die Funktionsfähigkeit des Schalters hin überprüft werden können.

Die Sicherheit des erfindungsgemäßen Verfahrens läßt sich weiter erhöhen, indem vor der Überprüfung der Schalter festgestellt wird, ob die Kondensatorspannung einen höchstzulässigen Wert noch nicht überstiegen hat. Hierdurch lassen sich Fehlauslösungen beim Prüfen der Schalter vermeiden, die auftreten könnten, falls der Kondensator beim Einschalten des Sicherheitssystems noch nicht vollständig entladen ist oder falls infolge eines Fehlers im Ladeschaltkreis der Kondensator zu schnell geladen wurde.

Zweckmäßigerweise wird die Kondensatorspannung bei geschlossenen Schaltern mit der Kondensatorspannung verglichen, die vor dem Schließen der Schalter vorlag, um eine Entladung des nur geringfügig aufgeladenen Auslösekondensators zu erfassen und um so die Leitfähigkeit der geschlossenen Schalter zu überprüfen. Zweckmäßigerweise kann hierzu ein Vergleichswert für die bei geschlossenen Schaltern vorliegende Kondensatorspannung vorgegeben werden, der insbesondere aus der Kondensatorspannung vor dem Schließen der Schalter ermittelt werden kann.

Besonders vorteilhaft ist bei diesem Verfahren, daß auch die Überprüfung des Auslösekondensators auf einfache Weise in die entsprechende Prüfroutine integriert werden kann. Dazu wird insbesondere nach dem Öffnen der beiden Schalter oder, falls nur einer vorhanden ist, des Schalters und dem Ablauf einer Wartezeit die Kondensatorspannung erneut erfaßt und mit dem entsprechenden Sollwert verglichen.

Besonders zweckmäßig ist es, wenn der über die Auslöseeinrichtung fließende Strom auf einen Wert beschränkt wird, der kleiner als der zulässige Prüfstrom für die Auslöseeinrichtung ist.

Die Erfindung wird im folgenden beispielsweise anhand der Zeichnung näher erläutert. In dieser zeigt:
- Fig. 1: ein vereinfachtes schematisches Schaltbild eines Sicherheitssystems, das für die Überprüfung mit dem erfindungsgemäßen Verfahren geeignet ist,
- Fig. 2: ein vereinfachtes schematisches Schaltbild eines herkömmlichen Sicherheitssystems,
- Fig. 3: ein Flußdiagramm einer herkömmlichen Prüfroutine und
- Fig.4: ein Flußdiagramm der Prüfroutine nach dem erfindungsgemäßen Verfahren.

In den verschiedenen Figuren der Zeichnung sind einander entsprechende Teile mit gleichen Bezugszeichen versehen.

Entsprechend Figur 1 weist ein Ausgangsschaltkreis 10 eines Sicherheitssystems einen Zünd- oder Auslösekondensator 11 auf, dessen einer Anschluß über einen Ladewiderstand 24 mit einem Versorgungsspannungseingang 13 sowie über eine Reihenschaltung aus einem ersten Schalter H, einer Auslöseeinrichtung 14 und einem zweiten Schalter L mit Masse verbunden ist. Der andere Anschluß des Kondensators 11 liegt unmittelbar an Masse. Ein Spannungsteiler 17, dessen Widerstände in Reihe zwischen einer festen Spannung, zum Beispiel 5 V, und Masse liegen, ist mit seinem Mittelabgriff 19 mit einer zur Auslöseeinrichtung 14 führenden Leitung 20 und mit einem Eingang einer insbesondere in einer Auslöseschaltung oder -elektronik integrierten Prüf- und Auswerteschaltung 21 verbunden, so daß nach dem Überprüfen der Schalter H, L, während das Sicherheitssystem in Bereitschaft ist, die Leitung 20 ständig auf Anliegeschlüsse überprüft werden kann.

Um den Ladezustand des Auslösekondensators 11, also die am ersten Anschluß des Auslösekondensators 11 vorliegende Spannung erfassen zu können, ist dieser Kondensatoranschluß über eine Wandlerschaltung 25, die beispielsweise als Spannungsteiler ausgebildet sein kann, mit der Prüf- und Auswerteschaltung 21 verbunden.

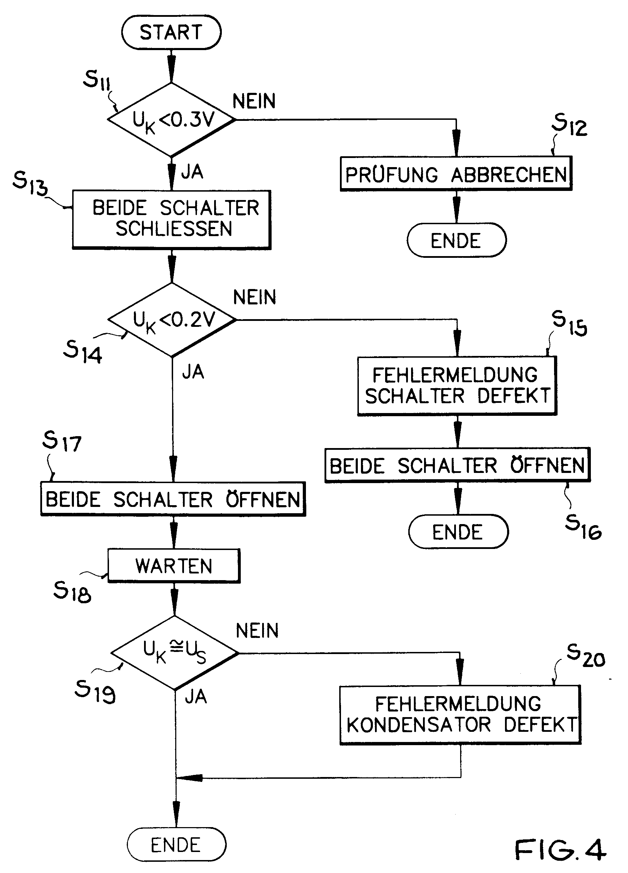

Zum Überprüfen der Funktionsfähigkeit des Ausgangsschaltkreises 10 wird unmittelbar nach dem Einschalten des Sicherheitssystems die entsprechende Prüfroutine gestartet. Nach dem Start der Prüfroutine wird - wie Figur 4 zeigt - im Schritt S11 überprüft, ob die Kondensatorspannung U_{K} kleiner als ein vorgegebener Wert, beispielsweise 0,3 V ist. Ist dies nicht der Fall, weil der Auslösekondensator 11 noch nicht vollständig entladen war oder bereits höher aufgeladen ist, wird im Schritt S12 die Prüfung abgebrochen. Anschließend wird die Prüfroutine beendet. Ist die Kondensatorspannung U_{K} wie erwartet kleiner als der vorgegebene Wert, werden im Schritt S13 beide Schalter H, L geschlossen. Anschließend wird im Schritt S14 die Kondensatorspannung U_{K} erneut gemessen und mit einem zweiten Wert verglichen, der beispielsweise 0,2 V sein kann. Anstelle eines fest vorgegebenen Vergleichswertes für die Überpüfung der Kondensatorspannung U_{K} im Schritt S14 kann auch ein Vergleichswert aus der im Schritt S11 festgestellten Kondensatorspannung ermittelt werden, in dem beispielsweise der im Schritt S11 ermittelte Wert der Kondensatorspannung U_{K} um 0,1 V verringert wird. Zeigt die überprüfte Kondensatorspannung U_{K} im Schritt S14, daß diese nicht in der gewünschten Weise gesunken oder größer als ein erlaubter Grenzwert, der z. B. entsprechend einem maximal zulässigen Prüfstrom für die Auslöseeinrichtung festgelegt sein kann, ist, wird im Schritt S15 eine Fehlermeldung erzeugt, die anzeigt, daß ein Fehler in den Schaltern H, L aufgetreten ist. Anschließend werden im Schritt S16 beide Schalter geöffnet, um dann die Prüfroutine zu beenden.

Wird im Schritt S14 festgestellt, daß die Kondensatorspannung in der gewünschten Weise abgesunken ist, werden anschließend im Schritt S17 beide Schalter wieder geöffnet und es wird im Schritt S18 eine Wartezeit gestartet, nach deren Ablauf im Schritt S19 die Kondensatorspannung U_{K} mit der Sollspannung U_{S} verglichen wird. Zeigt der Vergleich von Schritt S19, daß die Kondensatorspannung U_{K} ungefähr gleich der Sollspannung U_{S} ist, so wird die Prüfroutine zum Prüfen des Ausgangsschaltkreises insbesondere zum Prüfen der Schalter H, L beendet. Hat jedoch die Kondensatorspannung U_{K} nach Ablauf der Wartezeit von Schritt S18 nicht die erforderliche Höhe erreicht, so wird im Schritt S20 eine Fehlermeldung ausgegeben, die anzeigt, daß der Auslösekondensator 11 oder dessen Ladeschaltung defekt ist.

Da die Überprüfung der Schalter H, L sofort nach dem Einschalten des Sicherheitssystems zu einem Zeitpunkt erfolgt, zu dem die Kondensatorspannung U_{K} einen genügend kleinen Wert noch nicht überschritten hat und da der Ladestrom für den Auslösekondensator 11 mittels des Ladewiderstandes 24 auf einen Wert begrenzt ist, der sicherstellt, daß bei geschlossenen Schaltern H, L und praktisch ungeladenem Auslösekondensator 11 der Strom über die Auslöseeinrichtung 14 kleiner als der zulässige Prüfstrom für die Auslöseeinrichtung 14 ist, können beide Schalter H, L gleichzeitig geprüft werden, wobei auch sporadisch auftretende Masseschlüsse im aus Leitung 20 und Auslöseeinrichtung 14 gebildeten Zünd- oder Auslösekreis nicht zu einer Fehlauslösung führen können. Ein weiterer Vorteil des erfindungsgemäßen Verfahrens besteht darin, daß auch bei Sicherheitssystemen, die im Ausgangsschaltkreis 10 nur einen Schalter aufweisen, die Funktionsfähigkeit dieses einen Schalters einfach und zuverlässig überprüft werden kann.

## Patentansprüche

1. Verfahren zum Überprüfen der Funktionsfähigkeit eines Ausgangsschaltkreises einer Auslöseschaltung eines Sicherheitssystems, wobei der Ausgangsschaltkreis zumindest einen Schalter aufweist, der einen Auslösestrom von einem Auslösekondensator zu einer Auslöseeinrichtung schaltet,
wobei eine Überprüfung auf einen korrekten Zustand beteiligter Komponenten des Sicherheitssystems sofort nach dem Einschalten des Sicherheitssystems durchgeführt wird,
**dadurch gekennzeichnet,**
daß die Überprüfung des oder der Schalter (H, L) durchgeführt wird,
bevor der Auslösekondensator (11) auf seine Sollspannung (U_{S}) aufgeladen wird.

2. Verfahren nach Anspruch 1,
dadurch **gekennzeichnet,** daß vor der Überprüfung des oder der Schalter (H, L) die Kondensatorspannung (U_{K}) erfaßt und mit einem ersten, vorgegebenen Wert verglichen wird, und daß die Überprüfung des oder der Schalter (H, L) nur durchgeführt wird, wenn die Kondensatorspannung (U_{K}) kleiner als der vorgegebene Wert ist.

3. Verfahren nach Anspruch 1 oder 2,
dadurch **gekennzeichnet,** daß der oder die Schalter (H, L) zur Überprüfung geschlossen werden und daß nach dem Schließen des oder der Schalter (H, L) die Kondensatorspannung (U_{K}) erneut erfaßt und mit einem zweiten Wert verglichen wird, der nicht größer als ein erlaubter Grenzwert oder kleiner ist, als die Kondensatorspannung (U_{K}) vor dem Schließen des oder der Schalter (H, L).

4. Verfahren nach Anspruch 3,
dadurch **gekennzeichnet,** daß der zweite Wert vorgegeben ist.

5. Verfahren nach Anspruch 3,
dadurch **gekennzeichnet,** daß der zweite Wert aus der Kondensatorspannung (U_{K}) vor dem Schließen des oder der Schalter (H, L) ermittelt wird.

6. Verfahren nach einem der Ansprüche 1 bis 5,
dadurch **gekennzeichnet,** daß nach der Überprüfung des oder der Schalter (H, L) die Kondensatorspannung (U_{K}) erneut erfaßt und mit einem dritten Wert verglichen wird.

7. Verfahren nach Anspruch 6,
dadurch **gekennzeichnet,** daß die Kondensatorspannung (U_{K}) nach der Überprüfung des oder der Schalter (H, L) erst erfaßt wird, wenn eine vorgegebene Zeit abgelaufen ist.

8. Verfahren nach Anspruch 6 oder 7,
dadurch **gekennzeichnet,** daß die nach der Überprüfung des oder der Schalter (H, L) erfaßte Kondensatorspannung (U_{K}) mit dem Sollwert (U_{S}) der Kondensatorspannung verglichen wird.

9. Verfahren nach einem der vorhergehenden Ansprüche,
dadurch **gekennzeichnet,** daß der über den oder die geschlossenen Schalter (H, L) während der Überprüfung zur Auslöseeinrichtung (14) fließende Strom auf einen Wert beschränkt ist, der kleiner als der zulässige Prüfstrom für die Auslöseeinrichtung (14) ist.

## Claims

1. Method of checking the correct functioning of an output switching circuit of a trigger circuit of a safety system, wherein the output switching circuit comprises at least one switch which switches a tripping current from a tripping capacitor to a tripping device,
wherein a checking of the correct state of constituent components of the safety system is effected immediately after the safety system is switched on,
**characterized in**
that the checking of the switch or switches (H, L) is effected before the tripping capacitor (11) is charged up to its setpoint voltage (U_{S}).

2. Method according to claim 1,
characterized in that, prior to the checking of the switch or switches (H, L), the capacitor voltage (U_{K}) is measured and compared with a first, preselected value, and that the checking of the switch or switches (H, L) is effected only if the capacitor voltage (U_{K}) is lower than the preselected value.

3. Method according to claim 1 or 2,
characterized in that the switch or switches (H, L) are closed for checking and that, after closing of the switch or switches (H, L), the capacitor voltage (U_{K}) is measured once more and compared with a second value, which is not greater than a permitted limit value or smaller than the capacitor voltage (U_{K} prior to the closing of the switch or switches (H, L).

4. Method according to claim 3,
characterized in that the second value is preselected.

5. Method according to claim 3,
characterized in that the second value is determined from the capacitor voltage (U_{K}) prior to the closing of the switch or switches (H, L).

6. Method according to one of claims 1 to 5,
characterized in that, after the checking of the switch or switches (H, L), the capacitor voltage (U_{K}) is measured once more and compared with a third value.

7. Method according to claim 6,
characterized in that the capacitor voltage (U_{K}) after the checking of the switch or switches (H, L) is not measured until after a preselected time has elapsed.

8. Method according to claim 6 or 7,
characterized in that the capacitor voltage (U_{K}) measured after the checking of the switch or switches (H, L) is compared with the setpoint value (U_{S}) of the capacitor voltage.

9. Method according to one of the preceding claims,
characterized in that the current, which flows during checking through the closed switch or switches (H, L) to the tripping device (14), is limited to a value which is lower than the permissible testing current for the tripping device (14).

## Revendications

1. Procédé de vérification de l'aptitude fonctionnelle d'un circuit de sortie d'un circuit de déclenchement d'un système de sécurité, le circuit de sortie comportant au moins un commutateur, qui commute un courant de déclenchement d'un condensateur de déclenchement a un dispositif de déclenchement,
une vérification d'un état correct de composants concernés du système de sécurité étant effectuée aussitôt après la mise en marche du système de sécurité,
caractérisé en ce que la vérification du ou des commutateurs (H, L) est effectuée avant que le condensateur de déclenchement 11 soit chargé a sa tension de consigne (U_{S}).

2. Procédé selon la revendication 1, caractérisé en ce qu'avant la vérification du ou des commutateurs (H, L) la tension de condensateur (U_{K}) est détectée et comparée a une première valeur prescrite, et en ce que la vérification du ou des commutateurs (H, L) n'est effectuée que lorsque la tension de condensateur (U_{K}) est inférieure a la valeur prescrite.

3. Procédé selon la revendication 1 ou 2, caractérisé en ce que le ou les commutateurs (H, L) sont fermés en vue de la vérification et en ce qu'après la fermeture du ou des commutateurs (H, L) la tension de condensateur (U_{K}) est a nouveau détectée et comparée a une seconde valeur, qui n'est pas supérieure a une valeur limite admissible ou inférieure a la tension de condensateur (U_{K}) avant la fermeture du ou des commutateurs (H, L).

4. Procédé selon la revendication 3, caractérisé en ce que la seconde valeur est prédéterminée.

5. Procédé selon la revendication 3, caractérisé en ce que la seconde valeur est détectée a partir de la tension de condensateur (U_{K}) avant la fermeture du ou des commutateurs (H, L).

6. Procédé selon l'une quelconque des revendications 1 à 5, caractérisé en ce qu'après la vérification du ou des commutateurs (H, L), la tension de condensateur (U_{K}) est a nouveau détectée et comparée a une troisième valeur.

7. Procédé selon la revendication 6, caractérisé en ce que la tension de condensateur (U_{K}) n'est détectée qu'après la vérification du ou des commutateurs (H, L), après expiration d'un temps prédéterminé.

8. Procédé selon la revendication 6 ou 7, caractérisé en ce que la tension de condensateur (Uₖ) détectée après la vérification du ou des commutateurs (H, L) est comparée a la valeur de consigne (U_{S}) de la tension de condensateur.

9. Procédé selon l'une quelconque des revendications précédentes, caractérisé en ce que le courant circulant a travers le ou les commutateurs fermés (H, L) durant la vérification du dispositif de déclenchement (14) est limité a une valeur inférieure au courant de vérification admissible pour le dispositif de déclenchement (14).
